# EUROPÄISCHE PATENTSCHRIFT

(11) **EP 4 407 322 B1**
(45) Veröffentlichungstag und Bekanntmachung des Hinweises auf die Patenterteilung: **10.09.2025**
(21) Anmeldenummer: 24176735.9
(22) Anmeldetag: 08.07.2022
(51) Int. Cl.: B62J 45/41, B62J 45/412, B62J 45/423, G01P 3/487, B60C 29/02

(54) **FELGENMAGNETANORDNUNG ZUR FESTLEGUNG EINES MAGNETEN AN EINER FELGE MITTELS EINES SCHAFTS EINES VENTILS**
RIM MAGNET ASSEMBLY FOR SECURING A MAGNET TO A RIM BY MEANS OF A SHANK OF A VALVE
ENSEMBLE AIMANT DE JANTE PERMETTANT DE FIXER UN AIMANT SUR UNE JANTE AU MOYEN D'UNE TIGE D'UNE SOUPAPE

(30) Priorität: 19.08.2021 DE 102021209110
(43) Veröffentlichungstag der Anmeldung: 31.07.2024
(62) Teilanmeldung aus: 22183817.0
(73) Patentinhaber: Robert Bosch GmbH, 70442 Stuttgart (DE)
(72) Erfinder: Stegmaier, Juergen, 72827 Wannweil (DE); Kunz, Jonas, 73760 Nellingen Stadt Ostfildern (DE)

(56) Entgegenhaltungen:
- EP-A1- 1 728 711
- EP-A1- 3 435 024
- DE-A1- 102018 210 754
- DE-U1- 202016 003 819

## Beschreibung

### Stand der Technik

Die Erfindung betrifft eine Felgenmagnetanordnung zur Festlegung eines Magneten an einer Felge mittels eines Schafts eines Ventils, umfassend einen Magneten, der in einem Gehäuse angeordnet ist.

Die Erfindung betrifft weiter eine Felgenanordnung für ein Fahrrad oder dergleichen, umfassend eine Felgenmagnetanordnung und eine Felge.

Die Erfindung betrifft weiter ein Verfahren zur Herstellung einer Felgenmagnetanordnung.

Obwohl auf beliebige Felgen anwendbar, wird die vorliegende Erfindung in Bezug auf Felgen von Fahrrädern erläutert.

Für die Messung der Geschwindigkeit von Fahrrädern ist es bekannt geworden, einen Impulsgeber in Form eines Magneten an einer Speiche zu befestigen und mittels eines Magnetfeldsensors, der an einem Teil des Rahmens des Fahrrads angeordnet ist, den jeweiligen Umlauf des Magneten am Rad zu detektieren. Anhand der Zeitdifferenz zweier aufeinander folgender Durchgänge des Magneten und des Reifenumfangs kann die Geschwindigkeit des Fahrrads ermittelt werden, was beispielsweise aus der DE 10 2017 212 924 A1 bekannt geworden ist.

Ferner wird auf die Druckschriften EP 1 728 711 A1, DE 20 2016 003819 U1, EP 3 435 024 A1 und DE 10 2018 210754 A1 verwiesen.

### Offenbarung der Erfindung

In einer Ausführungsform stellt die vorliegende Erfindung eine Felgenmagnetanordnung zur Festlegung an einem Schaft eines Ventils, bereit, umfassend einen Magneten,
eine Festlegungseinrichtung, die ausgebildet ist, den Magneten an dem Schaft des Ventils in axialer Richtung des Schafts festzulegen, und
eine Verdrehsicherung, die ausgebildet ist, den Magneten in Umfangsrichtung des Schafts festzulegen.

In einer Ausführungsform stellt die vorliegende Erfindung eine Felgenanordnung für ein Fahrrad oder dergleichen, bereit, umfassend eine Felgenmagnetanordnung gemäß wie zuvor beschrieben und eine Felge, wobei der Magnet mittels der Festlegungseinrichtung und der Verdrehsicherung axial und rotatorisch an der Felge festgelegt ist.

In einer Ausführungsform stellt die vorliegende Erfindung ein Verfahren zur Herstellung einer Felgenmagnetanordnung wie zuvor beschrieben bereit, wobei das Gehäuse mittels eines 2-Komponenten-Spritzgießverfahrens hergestellt ist.

Einer der damit erzielten Vorteile ist eine einfache und zuverlässige Festlegung eines Magneten an einer Felge mittels des Schafts des Ventils. Darüber hinaus ist ein Vorteil, dass die Festlegung des Magneten an einer Vielzahl unterschiedlicher Felgen erfolgen kann. Ein weiterer Vorteil ist eine besonders zuverlässige Erfassung der Fahrgeschwindigkeit eines an einer Felge mittels der Felgenmagnetanordnung festgelegten Magneten. Der Magnet kann insbesondere als Permanentmagnet ausgeführt sein.

Weitere Merkmale, Vorteile und weitere Ausführungsformen der Erfindung sind im Folgenden beschrieben oder werden dadurch offenbar.

Gemäß der Erfindung ist der Magnet in einem Gehäuse, insbesondere hergestellt aus Kunststoff, angeordnet. Vorteil hiervon ist, dass der Magnet vor Umwelteinflüssen geschützt ist.

Gemäß einer weiteren vorteilhaften Weiterbildung der Erfindung weist die Festlegungseinrichtung eine Schraubeinrichtung auf, die auf den Schaft des Ventils aufschraubbar ist. Damit ist eine zuverlässige und lösbare Festlegung des Magneten an einer Felge möglich.

Gemäß einer weiteren vorteilhaften Weiterbildung der Erfindung weist das Gehäuse zumindest ein federelastisches Element auf, das in axialer Richtung des Schafts am Gehäuse vorstehend ausgebildet ist und insbesondere teilweise nach innen zur Mitte des Gehäuses zulaufend ausgebildet ist. Damit kann eine Vorspannung in axialer Richtung erzeugt werden, was eine besonders zuverlässige Festlegung am Ventil ermöglicht. Sinkt beispielsweise der Reifendruck ragt das Ventil weiter aus der Felge hervor. Dies kann mittels der Vorspannung kompensiert werden. Darüber hinaus kann durch das zumindest ein federelastisches Element auch eine Verdrehsicherung bereitgestellt werden, in dem dieses zumindest teilweise an der Felge formschlüssig anliegt.

Gemäß einer weiteren vorteilhaften Weiterbildung der Erfindung sind zumindest zwei, insbesondere vier federelastische Elemente angeordnet, die symmetrisch am Gehäuse angeordnet, und insbesondere gleich ausgebildet sind. Damit kann eine besonders hohe Vorspannung und eine besonders sichere Verdrehsicherung bereitgestellt werden.

Gemäß der Erfindung umfasst die Verdrehsicherung eine Formhülse, die zumindest eine Aussparung oder einen Vorsprung aufweist, und die in einen entsprechenden Vorsprung oder Aussparung des Magneten und/oder dessen Gehäuses eingreift. Dabei ist die Formhülse insbesondere selbstsichernd ausgebildet. Einer der damit erzielten Vorteile ist, dass eine einfache und gleichzeitig zuverlässige Festlegung des Magneten an dem Schaft des Ventils ermöglicht wird.

Gemäß der Erfindung ist die Verdrehsicherung durch einen auf den Magneten und/oder dessen Gehäuse aufgebrachten Klebstoffs gebildet, insbesondere in Form eines Doppel-Klebebandes. Damit ist eine besonders schnelle und einfache Festlegung des Magneten am Schaft des Ventils möglich.

Gemäß der Erfindung umfasst die Verdrehsicherung eine Klammer mit U-förmigen Querschnittsprofil, die an dem Schaft festlegbar und ausgebildet ist, im festgelegten Zustand des Magneten mittels Formschluss mit dem Magneten und/oder mit dem Gehäuse einerseits und zumindest teilweise mit einer Felge andererseits, eine Rotation zu verhindern. Einer der damit erzielten Vorteile ist, dass damit eine einfache Festlegung des Magneten an der Felge ermöglicht wird. Unter dem U-förmigen Profil ist insbesondere nicht nur ein Profil mit rechten Winkeln zu verstehen, sondern ebenfalls ein wannenförmiges Profil oder dergleichen.

Gemäß einer weiteren vorteilhaften Weiterbildung der Erfindung umfasst die Verdrehsicherung eine Bohrung mit Untermaß bezogen auf den Durchmesser des Schafts im Gehäuse des Magneten. Vorteil hiervon ist, dass wenig Bauteile zur Festlegung des Magneten benötigt werden.

Gemäß der Erfindung weist die Verdrehsicherung zumindest ein reibwerterhöhendes Element auf. Damit wird eine besonders zuverlässige Verdrehsicherung bereitgestellt.

Gemäß der Erfindung umfasst die Verdrehsicherung eine Presshülse, die an dem Schaft des Ventils angeordnet ist. Die Presshülse kann vorzugsweise aus Gummi hergestellt sein. Vorteil hiervon ist eine einfache und durch Deformierung bereitgestellte Verdrehsicherung. Hierbei kann zusätzlich eine Hülse zusammen mit der Presshülse, insbesondere oberhalb von dieser am Schaft des Ventils angeordnet werden.

Gemäß der Erfindung ist die Verdrehsicherung durch elastisches Material des Gehäuses des Magneten bereitgestellt. Vorteil hiervon ist eine Verdrehsicherung ohne zusätzliche Bauelemente. Gemäß einer weiteren vorteilhaften Weiterbildung der Erfindung ist der Magnet einteilig ausgebildet und der Magnet und insbesondere das Gehäuse weisen eine insbesondere zentrale zueinander korrespondierende Bohrung zur Festlegung auf dem Schaft des Ventils auf. Damit kann der Magnet und dessen Gehäuse einfach auf den Schaft des Gehäuses gesteckt werden und mittels der Festlegungseinrichtung festgelegt werden.

Gemäß einer weiteren vorteilhaften Weiterbildung der Erfindung ist der Magnet zweiteilig ausgebildet und eine Aufnahmeeinrichtung ist für die beiden Teile des Magneten im Gehäuse angeordnet. Einer der damit erzielten Vorteile ist, dass damit eine aufwendige und komplizierte Festlegung eines einzelnen Magneten, insbesondere mittels eine zentralen Bohrung, vermieden wird.

Gemäß einer weiteren vorteilhaften Weiterbildung der Erfindung ist der Magnet so angeordnet, dass dieser ein Magnetfeld senkrecht zur Axialrichtung des Schafts des Ventils oder parallel zu dessen Axialrichtung bereitstellt. Damit wird eine zuverlässige Erfassung des Magnetfelds des Magneten, insbesondere bei Ausrichtung des Magnetfelds senkrecht zur Axialrichtung des Schafts des Ventils, bereitgestellt.

Weitere wichtige Merkmale und Vorteile der Erfindung ergeben sich aus den Unteransprüchen, aus den Zeichnungen und aus der dazugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungen und Ausführungsformen der vorliegenden Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile oder Elemente beziehen.

Dabei zeigt
- Figur 1: eine seitliche Teilansicht eines Fahrrads im Bereich des Antriebs des Fahrrads;
- Figur 2a: eine Felgenmagnetanordnung gemäß einer Ausführungsform der vorliegenden Erfindung;
- Figur 2b: eine Felgenanordnung gemäß einer Ausführungsform der vorliegenden Erfindung;
- Figur 3: eine Felgenanordnung gemäß einer Ausführungsform der vorliegenden Erfindung;
- Figur 4: eine Felgenanordnung gemäß einer Ausführungsform der vorliegenden Erfindung;
- Figur 5: eine Felgenanordnung gemäß einer Ausführungsform der vorliegenden Erfindung;
- Figur 6: eine Felgenanordnung gemäß Figur 5 im Querschnitt;
- Figur 7a, 7b, 7c: jeweils eine Felgenanordnung gemäß einer Ausführungsform der vorliegenden Erfindung;
- Figur 8: eine Felgenmagnetanordnung gemäß einer Ausführungsform der vorliegenden Erfindung;
- Figur 9: eine Felgenanordnung gemäß einer Ausführungsform der vorliegenden Erfindung;
- Figur 10: eine Felgenanordnung gemäß einer Ausführungsform der vorliegenden Erfindung;
- Figur 11: eine Felgenanordnung gemäß einer Ausführungsform der vorliegenden Erfindung; und
- Figur 12: eine Felgenanordnung gemäß einer Ausführungsform der vorliegenden Erfindung;

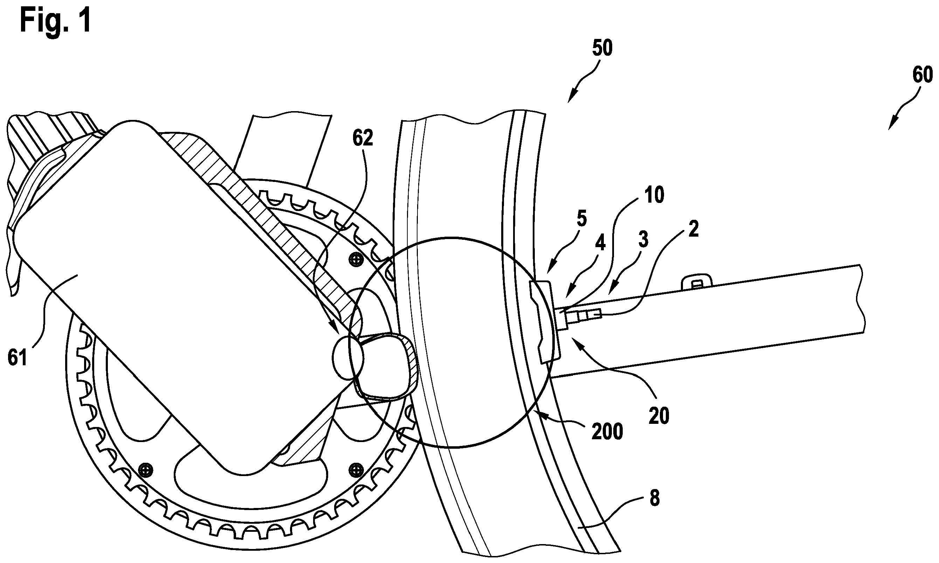

Figur 1 zeigt eine seitliche Teilansicht eines Fahrrads im Bereich des Antriebs des Fahrrads.

In Figur 1 ist ein Fahrrad 60 im Bereich des Antriebs 61 gezeigt. Dieser weist in bekannter Weise einen Magnetfeldsensor 62, integriert in dem Antrieb 61 auf. Weiterhin ist eine Felgenanordnung 50 mit Felgenmagnetanordnung 1 gezeigt mit einer Felge 8, die ein Ventil 3 aufweist. Das Ventil 3 weist einen Ventilschaft 2 auf, auf den ein in einem Gehäuse 5 angeordneter Magnet 4 aufgesetzt ist. Gehäuse 5 und Magnet 4 weisen hierfür eine zentrale Bohrung 20 auf. Das Gehäuse 5 liegt auf seiner Unterseite auf der Felge 8 des Fahrrads 60 auf. Beide sind dann mittels einer Montagemutter 10 am Schaft 2 des Ventils 3 festgelegt. Der Magnet 4 stellt ein Magnetfeld 200 bereit, das vom Magnetfeldsensor 62 gemessen werden kann.

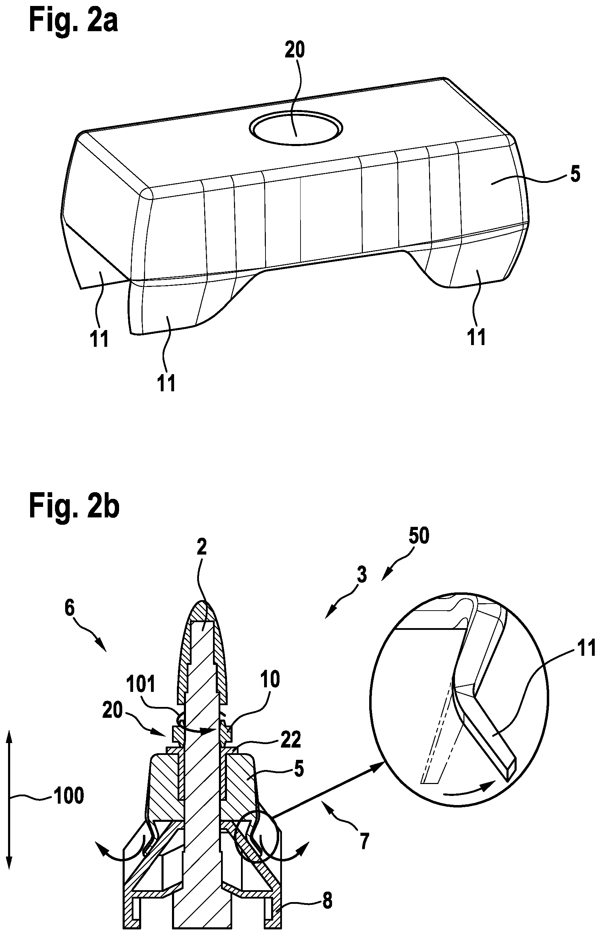

Figur 2a zeigt eine Felgenmagnetanordnung gemäß einer Ausführungsform der vorliegenden Erfindung.

In Figur 2a ist ein rechteckförmiger Magnet 4 angeordnet in einem im Wesentlichen rechteckförmigen Gehäuse 5 gezeigt. Damit das Gehäuse 5 sich im Fahrbetrieb nicht verdreht, weist das Gehäuse einen konstruktiven Verdrehschutz auf. Der Verdrehschutz ist hier durch flexible oder elastische Finnen 11 gebildet, welche sich der jeweiligen Felgenform anpassen können und in axialer Richtung des Schafts 2 vorstehend und teilweise in radialer Richtung nach innen ragend ausgebildet sind. Eine zweite Funktion der elastischen Finnen 11 besteht darin, eine Vorspannung aufzubringen, die dann die Montagemutter 10 hemmt und ein Lösen des Magneten 4 mit Gehäuse 5 im Betrieb verhindert.

Figur 2b zeigt eine Felgenanordnung gemäß einer Ausführungsform der vorliegenden Erfindung.

In Figur 2b ist der mittels einer Festlegungseinrichtung 6 montierte Magnet 4 samt Gehäuse 5 auf dem Schaft 2 eines Ventils 3 festgelegt gezeigt. Der Magnet 4 wird hierzu zunächst über das Ventil 3, genauer den Schaft 2 des Ventils 3 in Axialrichtung 100 des Schafts 2 geschoben, bis die flexiblen Finnen 11 die Felge 8 berühren. Das Bauteil, also Magnet 4 und dessen Gehäuse 5, weisen eine Öffnung beziehungsweise Bohrung 20, welches den Durchmesser des größten abzudeckenden Ventilschaftdurchmessers aufweist, beispielsweise dessen des Schraderventils. Bei einem Presta-Ventil kann eine Ausgleichshülse 22, wie hier gezeigt, zwischen den Schaft 2 und Bohrung 20 des Bauteils 4, 5 eingesetzt werden. Dann wird die Ventilmutter 10 auf das Ventil 3 geschraubt, bis sie auf der Ausgleichhülse 22 aufliegt. Nun drückt die Ventilmutter 10 das Bauteil über die Ausgleichshülse 22 auf die Felge 8. Die flexiblen Finnen 11 werden auf die Flanken der Felge 8 gedrückt und passen sich teilweise der Form der Felge 8 an. Nun wird die Ventilmutter 10 insbesondere von Hand weiter angezogen. Die Ventilmutter 10 der Festlegungseinrichtung 6 drückt nun die Ausgleichshülse 22 auf das Gehäuse 5 des Magneten 4. Da die flexiblen Finnen 11 eine gewisse Steifigkeit aufweisen, ist dieses System nun vorgespannt. Das Prinzip entspricht dabei dem einer Blattfeder. Je breiter die Felge 8 und je spitzer der Flankenwinkel der Felge 8 ist, desto mehr Vorspannkraft wird erzeugt, da die Finnen 11 weiter auseinandergedrückt werden. Eine zusätzliche Vorspannkraft kann bereits konstruktiv vorgegeben werden, indem die Finnen 11 in unbelastetem Zustand bereits nach innen zur Mitte des Bauteils 4, 5 zulaufend ausgeführt sind wie in den Figuren 2a und 2b gezeigt.

Diese Vorspannung verhindert, dass sich der Magnet 4 seitlich in Umfangsrichtung 101 des Schafts 2 verdreht. Da die Vorspannkraft insbesondere zwischen Ventilmutter 10 und Bauteil 4, 5 wirkt, verhindert sie an der reibschlüssigen Verbindung ebenfalls ein Lösen der Ventilmutter 10. Insbesondere durch Druckschwankungen im Reifen auf der Felge 8 kommt es zu einer Veränderung der Vorspannkraft. Beispielsweise führt ein Aufpumpen des Reifens beziehungsweise Schlauchs dazu, dass das Ventil 3 weiter aus der Felge 8 herausgedrückt wird und die Vorspannkraft abnimmt. Die Vorspannkraft durch die Finnen 11 ist dabei so groß, dass auch bei Druckschwankungen eine ausreichende Verdrehsicherung und ausreichende Hemmwirkung auf die Ventilmutter 10 gewährleistet ist. Die für den Anwendungsfall notwendige Vorspannkraft lässt sich durch eine Wahl des Materials hinsichtlich Elastizität sowie die Materialstärke der Finnen 11 beim Design des Bauteils 4, 5 einstellen. Ein effektiver Verdrehschutz wird durch insbesondere zumindest zwei Finnen 11 bereitgestellt, es können aber auch mehr sein, beispielsweise wie abgebildet vier Finnen 11. Bei der Verwendung von Tubeless-Ventilen kommt oftmals ein O-Ring zum Einsatz, welcher zwischen Felge 8 und Ventilmutter 10 eingelegt wird. Um den Magneten 4 samt Gehäuse 5 auch bei Tubeless-Ventilen einsetzen zu können, kann in einer weiteren, hier nicht dargestellten Ausführungsform auf der felgenzugewandten Seite des Bauteils 4, 5 im Bereich der Bohrung 20 eine vertiefte Nut ausgebildet werden, welche den O-Ring aufnimmt. Auf diese Weise kann die Unterseite des Bauteils 4, 5 weiter ohne Luftspalt auf der Felge 8 aufliegen.

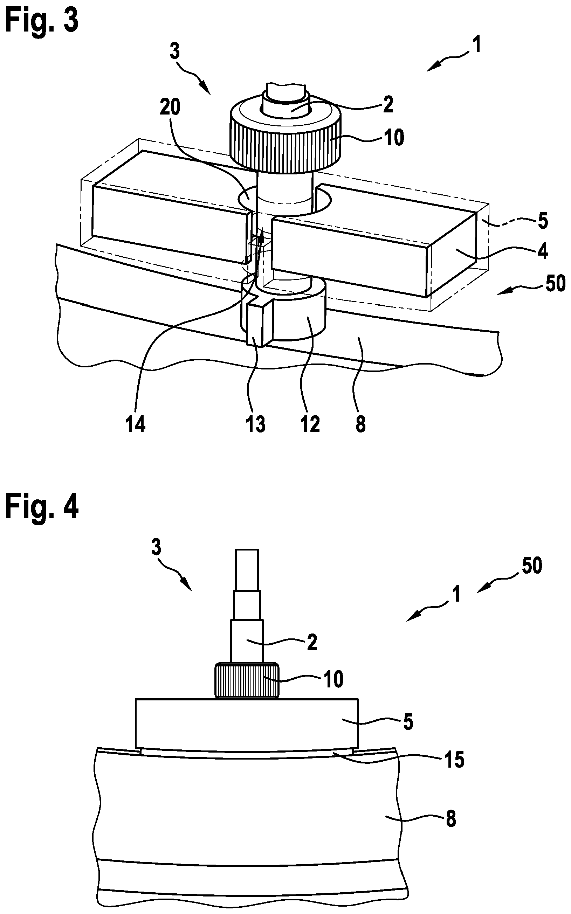

Figur 3 zeigt eine Felgenanordnung gemäß einer Ausführungsform der vorliegenden Erfindung.

In Figur 3 ist eine Felgenanordnung 50 gezeigt. Die Verdrehsicherung 7 umfasst hier über eine Formhülse 12, die auf den Schaft 2 des Ventils 3 geschraubt wird. Darüber wird der 4 samt Gehäuse 5 mittels der Bohrung 20 gesteckt. Dann wird das Bauteil 4, 5 mittels der Ventilmutter 10 fest verschraubt. Die Formhülse 12 hat eine definierte Außenkontur 13, deren Negativ 14 in dem Gehäuse 5, insbesondere in Form einer Umspritzung 5 des Magneten 4 abgebildet ist, hier ein Vorsprung 13 und eine korrespondierende Aussparung 14. Dadurch kann das Bauteil 4, 5 passgenau aufgesetzt werden. Die Fomhülse 12 ist so gestaltet, dass sie selbstsichernd ist. Dadurch wird eine Sicherung gegen Verdrehen des Magneten 4 samt Gehäuse 5 gewährleistet. Die Halteform der Formhülse 12 ist auch so gestaltet, dass sie das Verschrauben mit dem Ventil 3 vereinfacht. Es kann hierbei je ein Formhülsentype für Sclaverand- und Schraderventil bereitgestellt werden. Vorteile dieser Ausführungsform können unter anderem sein:
- Das Bauteil 4, 5 insgesamt kann sehr einfach und schlank gestaltet werden
- Die Formhülse 12 kann als einfaches Spritzgussteil hergestellt werden.
- Das Bauteil 4, 5 kann kostengünstig und einfach in großer Stückzahl hergestellt werden.
- Das Bauteil 4, 5 kann mit nahezu alle Felgenformen eingesetzt werden

Figur 4 zeigt eine Felgenanordnung gemäß einer Ausführungsform der vorliegenden Erfindung.

In Figur 4 ist nun eine Verdrehsicherung 7 einer Felgenanordnung 50 in Form eines doppelseitigem Klebebands 15 gezeigt.

Vor der Montage des Bauteils 4, 5 wird links und rechts der zentralen Bohrung 20 auf der zur Felge 8 zugewandten Seite des Gehäuses 5 des Magneten 4 ein doppelseitiges Klebeband 15 aufgebracht. Dann wird das Bauteil 4, 5 auf den Schaft 2 des Ventils 3 gesteckt und auf das Klebeband 15 gedrückt. Danach wird das Bauteil 4, 5 mittels der Ventilmutter 10 fest verschraubt. Das Klebeband 15 verhindert auch das Abheben des Bauteils 4, 5, insbesondere also des Magneten 4, falls sich die Ventilmutter 10 bei Druckschwankungen im Reifen auf der Felge 8 löst.

Vorteile dieser Ausführungsform können unter anderem sein:
- Der Magnet 4 und das Bauteil 4, 5 insgesamt können sehr einfach und schlank gestaltet werden
- Es kann übliches und damit kostengünstiges Doppelklebeband verwendet werden
- Das Bauteil 4, 5 kann kostengünstig und einfach in großer Stückzahl hergestellt werden.
- Das Bauteil 4, 5 kann mit nahezu alle Felgenformen eingesetzt werden
- Hohe Zuverlässigkeit, da das Bauteil 4, 5 auch bei Druckschwankungen an der Felge festgelegt bleibt.

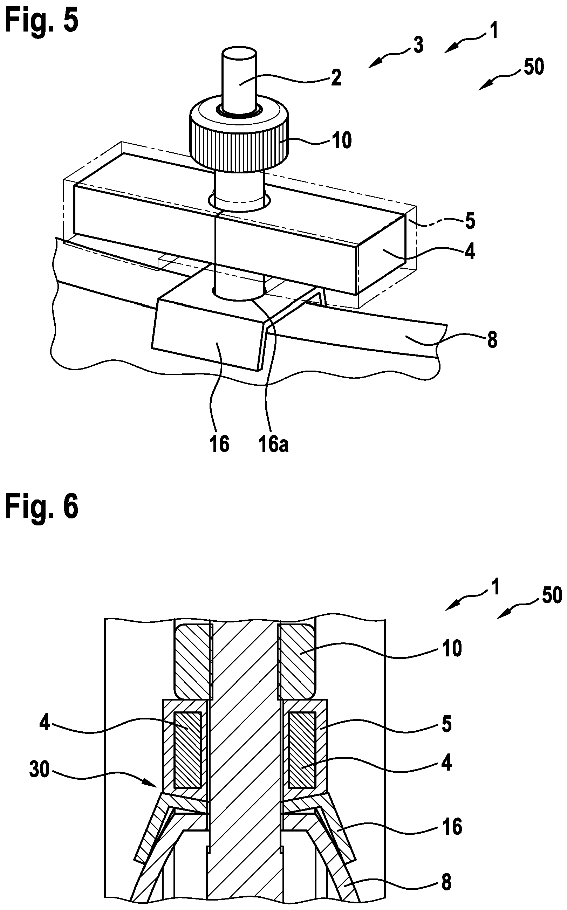

Figur 5 zeigt eine Felgenanordnung gemäß einer Ausführungsform der vorliegenden Erfindung und Figur 6 eine Felgenanordnung gemäß Figur 5 im Querschnitt.

In den Figuren 5 und 6 ist eine Felgenanordnung 50 gezeigt mit einer Verdrehsicherung 7 in Form einer Sicherungsklammer 16.

Diese Sicherungsklammer 16, die teilweise flexibel ausgebildet ist, wird hierbei über eine Bohrung 16a auf den Schaft 2 des Ventils 3 gesteckt. Darüber wird das Bauteil 4, 5 mit zentraler Bohrung 20 gesteckt und fest an die Felge 8 gedrückt. Dann wird das Bauteil 4, 5 mittels der Ventilmutter 10 fest verschraubt. Die Form der Sicherungsklammer 16 ist so ausgebildet, dass sie beim unbelasteten Aufbringen auf die Felge 8 nicht sich deren Form anpasst oder sich verbiegt. Erst durch Beaufschlagen der Sicherungsklammer 16 mit einer Anpresskraft wird die Sicherungsklammer 16 auseinander gedrückt und passt sich teilweise der Form der Felge 8 an. Das Material der Sicherungsklammer 16 ist so gewählt, dass die Sicherungsklammer 16 durch das Aufpressen auf die Felge 8 als Feder fungiert.

Dadurch entsteht eine Vorspannkraft. Die Form der Sicherungsklammer 16 wird als Negativform in dem Gehäuse 5 des Magneten 4 abgebildet, sodass mit der entsprechenden Anpresskraft eine formschlüssige Verbindung 30 zwischen Sicherungsklammer 16 und Gehäuse 5 bereitgestellt wird. Im Zusammenspiel mit der erzeugten Vorspannkraft wird nun so eine Verdrehsicherung 7 gewährleistet. Außerdem wird das beschriebene System gegenüber der Ventilmutter 10 verspannt, was einen Ausgleich von Druckschwankungen gewährleistet und ein Lösen der Ventilmutter 10 verhindert. Über Variation der Form beziehungsweise des Querschnittsprofils der Sicherungsklammer 16 können nahezu alle bekannten Felgenformen abgebildet werden.

Mögliche Vorteile dieser Ausführungsform sind
- Der Magnet 4 und das Bauteil 4, 5 insgesamt können sehr einfach und schlank gestaltet werden
- Einfache Anpassbarkeit der Sicherungsklammer 16 an unterschiedliche Felgenformen
- Das Sicherungsklammer 16 kann mit nahezu allen Felgenformen eingesetzt werden
- Kein Lösen des Bauteils 4, 5 und damit des Magneten4 bei Druckschwankungen im Reifen von der Felge 8.

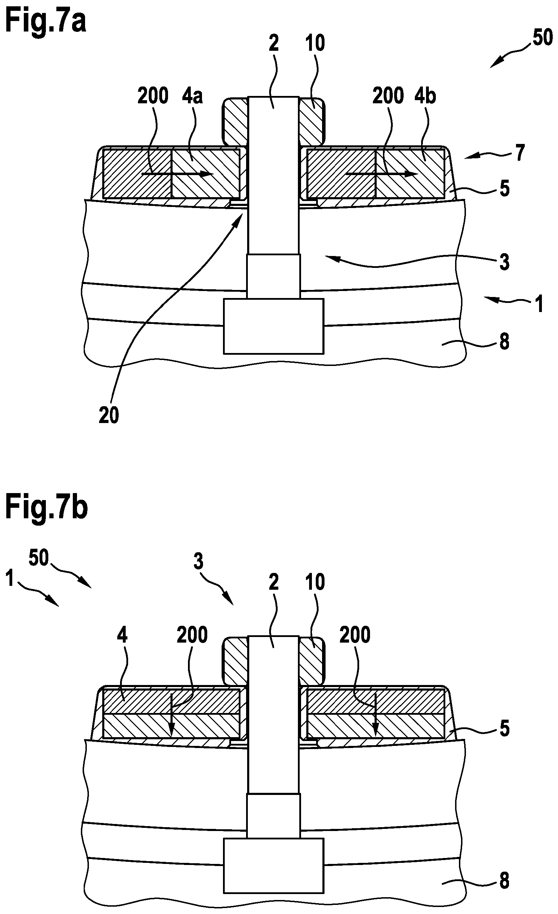

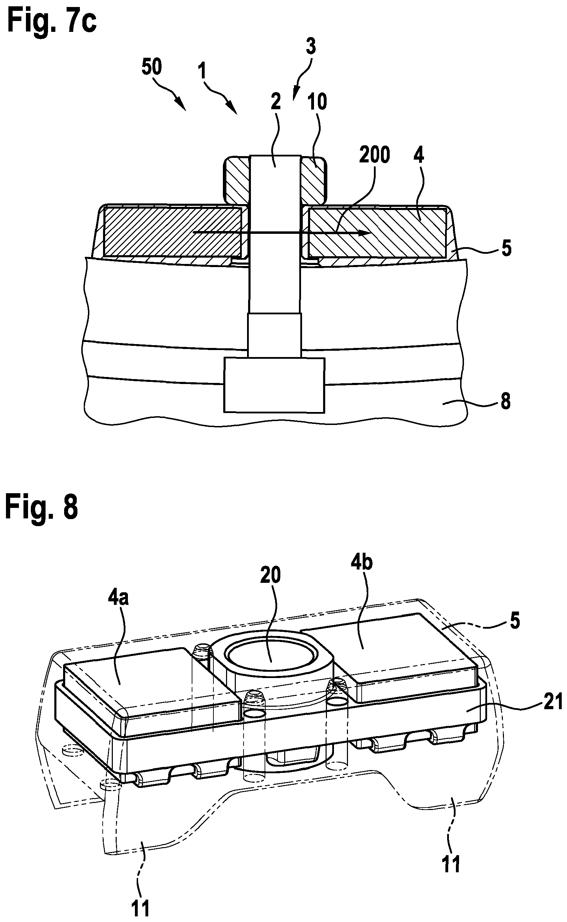

Figur 7a, 7b, 7c zeigt jeweils eine Felgenanordnung gemäß einer Ausführungsform der vorliegenden Erfindung.

In den Figuren 7b und 7c ist jeweils ein Bauteil 4, 5 in Form eines Monomagneten gezeigt. Der Monomagnet 4, 5 umfasst zwei Komponenten, einen monolitischen Magnetblock 4 und eine Kunststoffumspritzung 5. Für die Montage am Schaft 2 eines Ventils 3 weist der Monomagnet 4, 5 mittig ein Loch oder eine Bohrung 20 auf. Der Monomagnet 4, 5 kann, je nach Ausführung des Auswertungsalgorhythmus sowohl der Länge nach wie in Figur 7c abgebildet mit Magnetfeldrichtung 200, als auch der Höhe nach, gemäß Figur 7b, also senkrecht zur in Figur 7c gezeigten Richtung - Magnetfeldrichtung 200 - polarisiert sein.

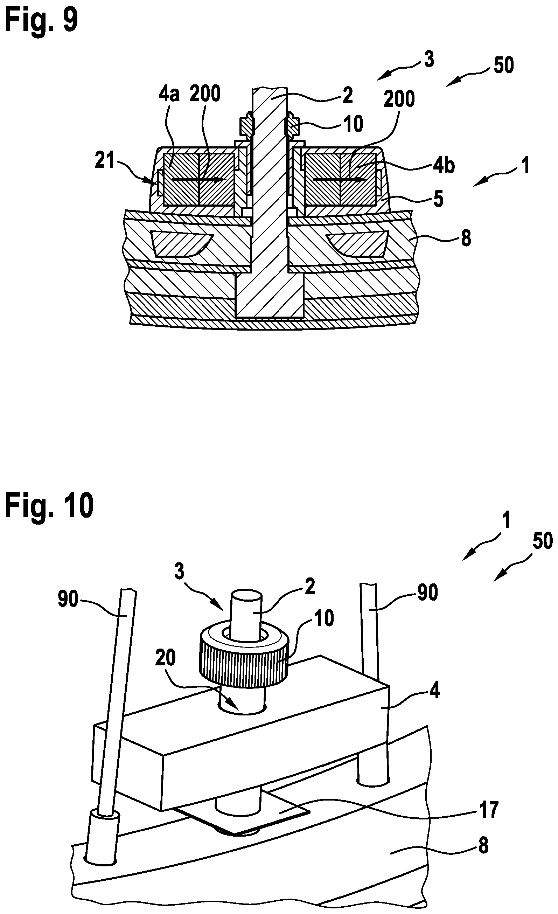

In Figur 7a ist ein Bauteil 4, 5 gezeigt, wobei der Magnet 4 zweiteilig mit zwei Teilen 4a, 4b ausgebildet ist. Die beiden Teile 4a, 4b sind dabei so angeordnet, dass diese eine gemeinsame Magnetfeldrichtung 200 - hier senkrecht zur Achse des Schafts 2 des Ventils 3 - aufweisen. Im Gegensatz zur der Ausführungsform der Figur 9 sind die beiden Teile 4a, 4b direkt umspritzt mit der Umspritzung 5 und nicht separat in einem Halter wie in Figur 9 angeordnet.

Die Umspritzung 5 schützt den Magneten 4 vor Witterungseinflüssen und Überbeanspruchung. Damit sich das Bauteil 4, 5 im Fahrbetrieb nicht verdreht, weist dieses eine Verdrehsicherung 7 auf, die durch die Umspritzung 5 beziehungsweise durch das Gehäuse 5 des Magneten 4 gebildet wird. Die Verdrehsicherung 7 kann analog der Ausführungsform der Figuren 2a, 2b durch flexible beziehungsweise elastische Finnen 11 realisiert sein, welche sich der Felgenform anpassen. Eine zweite Funktion der elastischen Finnen 11 besteht, wie bereits ausgeführt, darin, eine Vorspannung aufzubringen, die die Ventilmutter 10 hemmt und ein Lösen des Bauteils 4, 5 im Betrieb verhindert. Das Material der Umspritzung 5 wird insbesondere so gewählt, dass es zum einen genug Festigkeit aufweist, um die Kräfte der Ventilmutter 10 aufzunehmen und zum anderen genug Flexibilität aufweist, so dass sich die seitlichen Finnen 11 jeder Felgenform anpassen können. Ein möglicher Vorteil dieser Ausführungsform ist, dass der Magnet 4 und das Bauteil 4, 5 insgesamt sehr einfach, schlank und unauffällig gestaltet werden können.

Figur 8 zeigt eine Felgenmagnetanordnung gemäß einer Ausführungsform der vorliegenden Erfindung und Figur 9 eine Felgenanordnung gemäß einer Ausführungsform der vorliegenden Erfindung.

In Figur 8 ist ein Bauteil 4, 5 gezeigt, welches zwei identische Einzelmagneten 4a, 4b aufweist, die in einem gemeinsamen Halter 21 innerhalb eines Gehäuses 5, welches durch Umspritzung der beiden Magneten 4a, 4b gebildet ist, gemäß der Ausführungsform der Figuren 2a und 2b angeordnet sind. Die Einzelmagnete 4a, 4b können als Signalgeber dienen. Die Einzelmagnete 4a, 4b können je nach Ausführung des Auswertungsalgorhythmus sowohl der Länge nach wie in Figur 9 abgebildet mit Magnetfeldrichtung 200, als auch der Höhe nach, also senkrecht zur in Figur 9 gezeigten Richtung in der Ebene der Zeichnung der Figur 9 polarisiert sein. Der Halter oder Haltekorb 21 übernimmt zwei Funktionen. Zum einen hält dieser die Einzelmagnete 4a, 4b während des Umspritzungsvorgangs in Position, zum anderen nimmt er die Schraubkräfte auf und stabilisiert das Bauteil 4, 5. Die Finnen 11 stellen die in der Beschreibung zu den Figuren 2a, 2b beschriebene Vorspannkraft und Verdrehsicherung bereit.

Mögliche Vorteile dieser Ausführungsform sind
- Kostengünstigeres Design durch höhere Magnetstückzahl
- Stabileres Design

In den folgenden Ausführungsformen wird die Verdrehsicherung 7 über die Erhöhung des Reibwertes zwischen Magnet 4 beziehungsweise Gehäuse 5 und Felge 8 realisiert.

Figur 10 zeigt eine Felgenanordnung gemäß einer Ausführungsform der vorliegenden Erfindung.

In Figur 10 ist eine Felgenanordnung 50 gezeigt, die zwischen zwei benachbarten Speichen 90 eines Rades angeordnet ist. Hierbei sind ein oder mehrere, sogenannte "friction shims", also Reibscheiben 17, zwischen Gehäuseunterseite des Bauteils 4, 5 oder falls der Magnet 4 kein Gehäuse aufweist, zwischen Unterseite des Magneten 4 und Felge 8 angeordnet. Diese Friction Shims 17 werden so ausgebildet, dass sie mit ihrem Durchmesser an Sclaverand- und Schraderventil angepasst sind und die Auflagefläche des Magneten 4 beziehungsweise dessen Gehäuse 5 im direkten Umfeld der Bohrung 20 abbilden. Die Scheibe oder Scheiben 17 werden über den Schaft 2 des Ventils 3 gesteckt. Anschließend wird das Bauteil 4, 5 darüber gesteckt und danach die Ventilmutter 10 auf den Schaft 2 des Ventils 3 geschraubt und fest angezogen. Es kommt zu Mikroformschlüssen zwischen Reibscheibe 17 und Gehäuse 5 und Reibscheibe 17 und Felge 8. So kann der Reibwert zumindest verdoppelt werden und dadurch wird eine Verdrehsicherung 7 gewährleistet.

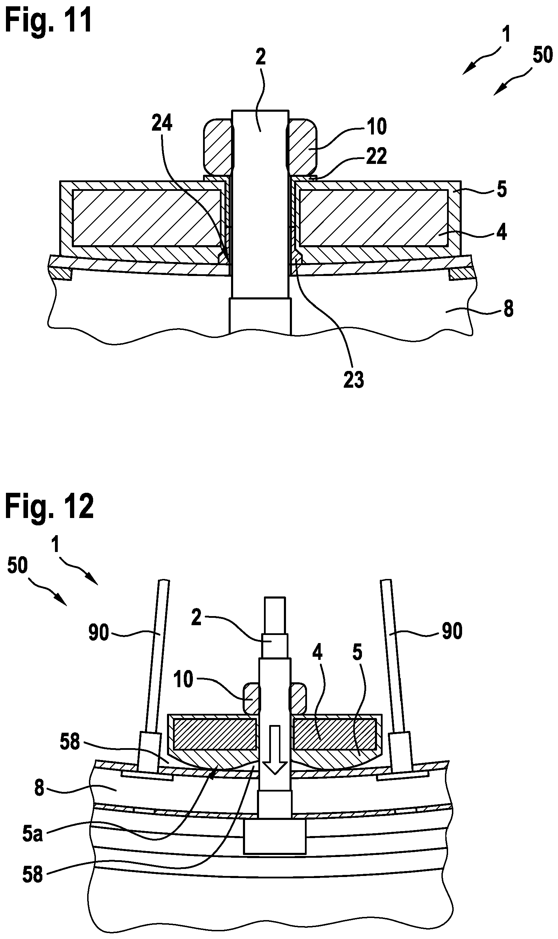

Figur 11 zeigt eine Felgenanordnung gemäß einer Ausführungsform der vorliegenden Erfindung.

In der in Figur 11 dargestellten Ausführungsform wird die Verdrehsicherung 7 durch eine Gummihülse 23 erzeugt, die verpresst wird und sich dadurch zwischen Ventilgewinde und Wand der Bohrung 20 des Bauteils 4, 5 presst. Hierzu wird die Gummihülse 23 über den Schaft 2 des Ventils 3 das Ventil gestülpt. Dann wird das Bauteil 4, 5 auf die Gummihülse 23 gesteckt und auf die Felge 8 gedrückt. Danach wird eine weitere Hülse 22 aus unelastischem Material so weit in die Bohrung 20 des Bauteils 4, 5 eingebracht, bis sie auf der Gummihülse 23 aufliegt. Nun wird die Ventilmutter 10 auf den Schaft 2 des Ventils 3 geschraubt und angezogen, bis die unelastische Hülse 22 mit dem Bund auf dem Bauteil 4, 5 aufsitzt. Dadurch wird die Gummihülse 23 so stark deformiert, dass sie sich zwischen Ventilgewinde und Wandung der Bohrung 20 verpresst (Bezugszeichen 24). Somit ist eine Verdrehsicherung 7 gewährleistet.

Mögliche Vorteile dieser Ausführungsform sind
- Das Bauteil 4, 5 kann sehr einfach und schlank gestaltet werden
- Einfache, kostengünstige Fertigung in großen Stückzahlen
- Es können alle Felgenformen verwendet werden
- Kein Lösen des Bauteils 4, 5 bei Druckschwankungen im Reifen

Figur 12 zeigt eine Felgenanordnung gemäß einer Ausführungsform der vorliegenden Erfindung.

In der in Figur 12 gezeigten Ausführungsform wird die Verdrehsicherung 7 durch das Material des Gehäuses 5 des Magneten 4 erzeugt. Der Magnet 4 wird mit einem Elastomer 5a umspritzt, welches einen hohen Reibwert hat und sich zumindest teilweise verformt. Das Design der Umspritzung 5a ist so gewählt, dass sich die Umspritzung 5a an der Unterseite des Bauteils 4, 5 beim Verschrauben am Schaft 2 des Ventils 3 verformt und verspannt. Insbesondere ist wie in Figur 12 dargestellt die Umspritzung 5a in Bezug auf die Oberfläche der Felge 8 nicht plan, sondern ist so gewählt, dass bei Auflegen der Umspritzung 5a Hohlräume 58 zwischen Gehäuse 5 und Felge 8 gebildet werden. Bei Verschrauben verformt sich das Elastomer und die Hohlräume 58 werden durch das Elastomer ausgefüllt. Durch die so erzeugte Kraft verspannt sich das Bauteil 4, 5 gegen die Ventilmutter 10. Im Zusammenspiel mit dem erhöhten Reibwert zwischen Elastomer und beispielsweise einer Aluminium-Felge wird die Verdrehsicherung 7 gewährleistet. Zudem wird das System gegenüber der Ventilschraube 10 verspannt, was das System weniger anfällig gegenüber Druckschwankungen macht.

Mögliche Vorteile dieser Ausführungsform sind
- Das Bauteil 4, 5 kann sehr einfach und schlank gestaltet werden
- Einfache, kostengünstige Fertigung in großen Stückzahlen
- Es können alle Felgenformen verwendet werden
- Kein Lösen des Bauteils 4, 5 bei Druckschwankungen im Reifen

Im Folgenden werden nicht dargestellte Ausführungsformen beschrieben.

In einer, hier nicht gezeigten Ausführungsform, wird die Verdrehsicherung 7 dadurch bereitgestellt, dass der überwiegende Teil der zentralen Bohrung 20 im Bauteil 4, 5 Untermaß gegenüber dem Schaft 2 des Ventils 3 hat. Im unteren Teil der Bohrung 20 im Bereich der Felge 8 sind insbesondere die ersten drei Gewindegänge des Ventilgewindes angeschnitten. Das Bauteil 4, 5 wird nun durch Aufschrauben auf den Schaft 2 des Ventils 3 festgelegt. Dabei schneidet sich das Gewinde des Ventils 3 in die Wandung der Bohrung 20 des Gehäuses, hier in Form einer Umspritzung. Das Material der Umspritzung ist so gewählt, dass zum einen das Gewinde geschnitten wird und zum anderen die Reibung auf die Gewindegänge des Schafts 2 des Ventils 3 hoch ist. So kann eine Verdrehsicherung 7 gewährleistet werden. Die Variation von Sclaverand- und Schraderventil wird insbesondere dadurch gewährleistet, dass die Wandung der Bohrung 20 so dick gewählt wird, dass ein einfaches Aufbohren von Sclaverand- auf Schrader-Kernlochdurchmesser möglich ist. Die Ventilmutter 10 kann als zusätzliche Sicherung aufgeschraubt werden. Mögliche Vorteile dieser Ausführungsform sind
- Das Bauteil 4, 5 kann sehr einfach und schlank gestaltet werden
- Ventilvariation kann einfach durch einen Mechaniker, Kunden oder dergleichen umgesetzt werden
- Einfach, kostengünstige Fertigung in großen Stückzahlen
- Es können alle Felgenformen verwendet werden
- Kein Lösen des Bauteils 4, 5 bei Druckschwankungen im Reifen
- Ventilmutter wird nicht mehr benötigt und kann entfallen.

Zusammenfassend weist zumindest eine der Ausführungsformen der Erfindung zumindest einen der folgenden Vorteile auf:
- Einfache, kostengünstige Fertigung, insbesondere in großen Stückzahlen
- Einfache Festlegung
- Zuverlässige Festlegung, sowohl axial als auch in Umfangsrichtung am Ventilschaft
- Unempfindlichkeit hinsichtlich der Position an der Felge gegenüber Druckschwankungen.
- Wenig Bauelemente zur Festlegung.

Insgesamt kann ein Monomagnet 4 zumindest eine der folgenden Eigenschaften aufweisen:
- Remanenz zw. 1,30T und 1,4T, insbesondere zwischen 1,32 T und 1,35T
- Länge: 35mm-50mm, insbesondere 40-45 mm
- Breite: 10-20 mm, insbesondere 12,5-17,5 mm
- Höhe: 5-20 mm, insbesondere 6-9 mm
- Gewicht (ohne/mit Gehäuse): 15-20g/20-30g
- Magnetisierungsgrad zumindest N45, zumindest der Stufe M, insbesondere Stufe H

Insgesamt kann ein Bauteil 4, 5 mit zweiteiligem Magnet 4 zumindest eine der folgenden Eigenschaften aufweisen:
- Remanenz zw. 1,40T und 1,5T, insbesondere zwischen 1,42 T und 1,48T
- Länge: 35mm-50mm, insbesondere 40-45 mm
- Breite: 10-20 mm, insbesondere 12,5-17,5 mm
- Höhe: 5-20 mm, insbesondere 6-9 mm
- Einzelmagnetlänge: 10mm-20mm, insbesondere 12-15 mm
- Einzelmagnetbreite: 10-20 mm, insbesondere 12,5-17,5 mm
- Einzelmagnethöhe: 5-20 mm, insbesondere 6-9 mm
- Gewicht (ohne/mit Gehäuse): 15-20g/20-30g
- Magnetisierungsgrad zumindest N45, insbesondere N52, zumindest der Stufe M

Obwohl die vorliegende Erfindung anhand bevorzugter Ausführungsbeispiele beschrieben wurde, ist sie nicht darauf beschränkt, sondern auf vielfältige Weise innerhalb des Schutzbereichs der angefügten Ansprüche modifizierbar.

## Patentansprüche

1. Felgenmagnetanordnung (1) zur Festlegung eines Magneten an einer Felge (8) mittels eines Schafts (2) eines Ventils (3), umfassend
einen Magneten (4),
eine Festlegungseinrichtung (6, 10), die ausgebildet ist, den Magneten (4) an dem Schaft (2) des Ventils (3) in axialer Richtung (100) des Schafts (2) festzulegen, und eine Verdrehsicherung (7), die ausgebildet ist, den Magneten (4) in Umfangsrichtung (101) des Schafts (2) festzulegen, **dadurch gekennzeichnet, dass** die Verdrehsicherung (7):
- durch einen auf den Magneten (4) und/oder dessen Gehäuse (5) aufgebrachten Klebstoff gebildet ist, insbesondere in Form eines Doppel-Klebebandes (15, und/oder
- eine Klammer (16) mit U-förmigen Querschnittsprofil umfasst, die an dem Schaft (2) festlegbar ist und die ausgebildet ist, im festgelegten Zustand des Magneten (4) mittels Formschluss mit dem Magneten (4) und/oder mit dem Gehäuse (5) einerseits und zumindest teilweise mit einer Felge (8) andererseits, eine Rotation zu verhindern, und/oder
- zumindest ein reibwerterhöhendes Element aufweist, und/oder
- eine Presshülse umfasst, die an dem Schaft (2) des Ventils (3) angeordnet und/oder durch elastisches Material des Gehäuses (5) des Magneten (4) bereitgestellt ist, und/oder
- eine Formhülse (12) umfasst, die zumindest eine Aussparung oder einen Vorsprung (13) aufweist, die in einen entsprechenden Vorsprung oder Aussparung (14) des Magneten (4) und/oder dessen Gehäuse (5) eingreift und der Magnet (4) in dem Gehäuse (5) angeordnet ist.

2. Felgenmagnetanordnung gemäß Anspruch 1, wobei der Magnet (4) in einem Gehäuse (5), insbesondere hergestellt aus Kunststoff, angeordnet ist.

3. Felgenmagnetanordnung gemäß Anspruch 1 oder 2, wobei die Festlegungseinrichtung (6) eine Schraubeinrichtung (10) aufweist, die auf den Schaft (2) des Ventils (3) aufschraubbar ist.

4. Felgenmagnetanordnung gemäß Anspruch 2, wobei das Gehäuse (5) zumindest ein federelastisches Element (11) aufweist, das in axialer Richtung (100) des Schafts (2) am Gehäuse (5) vorstehend ausgebildet ist und insbesondere teilweise nach innen zur Mitte des Gehäuses (5) zulaufend ausgebildet ist.

5. Felgenmagnetanordnung gemäß Anspruch 4, wobei zumindest zwei, insbesondere vier federelastische Elemente (11) angeordnet sind, die symmetrisch am Gehäuse (5) angeordnet, und insbesondere gleich ausgebildet sind.

6. Felgenmagnetanordnung gemäß einem der Ansprüche 1-5, wobei die Verdrehsicherung (7) eine Bohrung (20) mit Untermaß bezogen auf den Durchmesser des Schafts (2) im Gehäuse (5) des Magneten (4) umfasst.

7. Felgenmagnetanordnung gemäß einem der Ansprüche 1-6, wobei der Magnet (4) einteilig ausgebildet ist und der Magnet (4) und insbesondere das Gehäuse (5) eine insbesondere zentrale, zueinander korrespondierende Bohrung (20) zur Festlegung auf dem Schaft (2) des Ventils (3) aufweisen.

8. Felgenmagnetanordnung nach einem der Ansprüche Anspruch 2 bis 7, wobei der Magnet (4) zweiteilig ausgebildet ist und eine Aufnahmeeinrichtung (21) für die beiden Teile (4a, 4b) des Magneten (4) im Gehäuse (5) angeordnet ist.

9. Felgenmagnetanordnung gemäß einem der Ansprüche 1-8, wobei der Magnet (4) so angeordnet ist, dass dieser ein Magnetfeld (200) senkrecht zur Axialrichtung (100) des Schafts (2) des Ventils (3) oder parallel zu dessen Axialrichtung (100) bereitstellt.

10. Verfahren zur Herstellung einer Felgenmagnetanordnung gemäss einem der Ansprüche 1-9 zur Festlegung eines Magneten an einer Felge (8) mittels eines Schafts (2) eines Ventils (3), umfassend einen Magneten (4), eine Festlegungseinrichtung (6, 10), die ausgebildet ist, den Magneten (4) an dem Schaft (2) des Ventils (3) in axialer Richtung (100) des Schafts (2) festzulegen, und eine Verdrehsicherung (7), die ausgebildet ist, den Magneten (4) in Umfangsrichtung (101) des Schafts (2) festzulegen, wobei der Magnet (4) in einem Gehäuse (5), insbesondere hergestellt aus Kunststoff, angeordnet ist und, wobei das Gehäuse (5) mittels eines 2-Komponenten-Spritzgießverfahrens hergestellt ist.

11. Fahrrad mit einer Felge umfassend eine Felgenmagnetanordnung gemäß einem der Ansprüche 1-9.

## Claims

1. Rim magnet arrangement (1) for fixing a magnet on a rim (8) by means of a stem (2) of a valve (3), comprising
a magnet (4),
a fixing device (6, 10) which is configured to fix the magnet (4) on the stem (2) of the valve (3) in the axial direction (100) of the stem (2), and an anti-rotation safeguard (7) which is configured to fix the magnet (4) in the circumferential direction (101) of the stem (2), **characterized in that** the anti-rotation safeguard (7):
- is formed by an adhesive applied to the magnet (4) and/or its housing (5), in particular in the form of a double-sided adhesive tape (15), and/or
- a clip (16) with a U-shaped cross-sectional profile which can be fixed on the stem (2) and is configured, in the fixed state of the magnet (4), to prevent a rotation by means of a positively locking connection to the magnet (4) and/or to the housing (5) firstly and at least partially to a rim (8) secondly, and/or
- at least one element which increases the coefficient of friction, and/or
- comprises a pressing sleeve arranged on the stem (2) of the valve (3) and/or provided by elastic material of the housing (5) of the magnet (4), and/or
- comprises a forming sleeve (12) which has at least one recess or projection (13) which engages into a corresponding projection or recess (14) of the magnet (4) and/or its housing (5), and the magnet (4) is arranged in the housing (5).

2. Rim magnet arrangement according to Claim 1, wherein the magnet (4) is arranged in a housing (5), in particular produced from plastic.

3. Rim magnet arrangement according to Claim 1 or 2, wherein the fixing device (6) has a screwing device (10) which can be screwed onto the stem (2) of the valve (3).

4. Rim magnet arrangement according to Claim 2, wherein the housing (5) has at least one resilient element (11) which is configured so as to project on the housing (5) in the axial direction (100) of the stem (2), and is configured, in particular, so as to taper partially inwards to the centre of the housing (5).

5. Rim magnet arrangement according to Claim 4, wherein at least two, in particular four, resilient elements (11) are arranged which are arranged symmetrically on the housing (5) and, in particular, are of identical configuration.

6. Rim magnet arrangement according to one of Claims 1-5, wherein the anti-rotation safeguard (7) comprises, in the housing (5) of the magnet (4), a bore (20) with an undersize in relation to the diameter of the stem (2).

7. Rim magnet arrangement according to one of Claims 1-6, wherein the magnet (4) is of single-part configuration, and the magnet (4) and, in particular, the housing (5) have a bore (20) which corresponds to each other and is, in particular, central for fixing on the stem (2) of the valve (3).

8. Rim magnet arrangement according to one of Claims Claim 2-7, wherein the magnet (4) is of two-part configuration, and a receiving device (21) for the two parts (4a, 4b) of the magnet (4) is arranged in the housing (5).

9. Rim magnet arrangement according to one of Claims 1-8, wherein the magnet (4) is arranged in such a way that it provides a magnetic field (200) perpendicularly with respect to the axial direction (100) of the stem (2) of the valve (3) or parallel to its axial direction (100).

10. Method for producing a rim magnet arrangement according to one of Claims 1-9 for fixing a magnet on a rim (8) by means of a stem (2) of a valve (3), comprising a magnet (4), a fixing device (6, 10) which is designed to fix the magnet (4) on the stem (2) of the valve (3) in the axial direction (100) of the stem (2), and an anti-rotation safeguard (7) which is designed to fix the magnet (4) in the circumferential direction (101) of the stem (2), wherein the magnet (4) is arranged in a housing (5), in particular produced from plastic, and wherein the housing (5) is produced by means of a two-component injection moulding process.

11. Bicycle with a rim comprising a rim magnet arrangement according to one of Claims 1-9.

## Revendications

1. Agencement (1) d'aimant de jante pour fixer un aimant sur une jante (8) au moyen d'une tige (2) d'une valve (3), comprenant
un aimant (4),
un dispositif de fixation (6, 10) qui est conçu pour fixer l'aimant (4) sur la tige (2) de la valve (3) dans la direction axiale (100) de la tige (2), et un dispositif anti-rotation (7) qui est conçu pour fixer l'aimant (4) dans la direction circonférentielle (101) de la tige (2), **caractérisé en ce que** le dispositif anti-rotation (7) :
- est formé par un adhésif appliqué sur l'aimant (4) et/ou son boîtier (5), en particulier sous la forme d'un ruban adhésif double (15), et/ou
- comprend une pince (16) à profil de section en U, qui est apte à être fixée sur la tige (2) et qui est conçue de façon à empêcher une rotation à l'état fixé de l'aimant (4) au moyen d'une liaison par complémentarité de forme avec l'aimant (4) et/ou avec le boîtier (5) d'une part et au moins partiellement avec une jante (8) d'autre part, et/ou
- présente au moins un élément augmentant le coefficient de frottement, et/ou
- comprend un manchon de compression qui est agencé sur la tige (2) de la soupape (3) et/ou est fourni par un matériau élastique du boîtier (5) de l'aimant (4), et/ou
- comprend un manchon de forme (12) qui présente au moins un évidement ou une saillie (13) qui s'engage dans une saillie ou un évidement correspondant (14) de l'aimant (4) et/ou de son boîtier (5) et l'aimant (4) est disposé dans le boîtier (5).

2. Agencement d'aimant de jante selon la revendication 1, dans lequel l'aimant (4) est disposé dans un boîtier (5), en particulier fabriqué en matière plastique.

3. Agencement d'aimant de jante selon la revendication 1 ou 2, dans lequel le dispositif de fixation (6) comprend un dispositif à vis (10) qui est apte à être vissé sur la tige (2) de la valve (3).

4. Agencement d'aimant de jante selon la revendication 2, dans lequel le boîtier (5) comporte au moins un élément élastique (11) qui est conçu de façon à faire saillie du boîtier (5) dans la direction axiale (100) de la tige (2) et qui est notamment conçu de façon à aller en se rétrécissant partiellement vers l'intérieur en direction du centre du boîtier (5).

5. Agencement d'aimant de jante selon la revendication 4, dans lequel sont disposés au moins deux, en particulier quatre, éléments élastiques (11), qui sont disposés symétriquement sur le boîtier (5), et sont en particulier réalisés de manière identique.

6. Agencement d'aimant de jante selon l'une des revendications 1 à 5, dans lequel le dispositif anti-rotation (7) comprend un alésage (20) qui est sous-dimensionné par rapport au diamètre de la tige (2) dans le boîtier (5) de l'aimant (4).

7. Agencement d'aimant de jante selon l'une des revendications 1 à 6, dans lequel l'aimant (4) est réalisé en une seule pièce, et l'aimant (4) et notamment le boîtier (5) présentent un alésage (20), notamment central, se correspondant mutuellement, pour la fixation sur la tige (2) de la valve (3).

8. Agencement d'aimant de jante selon l'une des revendications 2 à 7, dans lequel l'aimant (4) est réalisé en deux parties et un dispositif de réception (21) des deux parties (4a, 4b) de l'aimant (4) est disposé dans le boîtier (5).

9. Agencement d'aimant de jante selon l'une des revendications 1 à 8, dans lequel l'aimant (4) est agencé de manière à fournir un champ magnétique (200) perpendiculaire à la direction axiale (100) de la tige (2) de la valve (3) ou parallèle à la direction axiale (100) de celle-ci.

10. Procédé de fabrication d'un agencement d'aimant de jante selon l'une quelconque des revendications 1 à 9 pour fixer un aimant sur une jante (8) au moyen d'une tige (2) d'une valve (3), comprenant un aimant (4), un dispositif de fixation (6, 10) adapté pour fixer l'aimant (4) sur la tige (2) de la valve (3) dans la direction axiale (100) de la tige (2), et un dispositif anti-rotation (7), qui est conçu pour fixer l'aimant (4) dans la direction circonférentielle (101) de la tige (2), l'aimant (4) étant disposé dans un boîtier (5), en particulier fabriqué en matière plastique, et le boîtier (5) étant fabriqué au moyen d'un procédé de moulage par injection à 2 composants.

11. Bicyclette avec une jante comprenant un agencement d'aimant de jante selon l'une quelconque des revendications 1 à 9.
